**Europäisches Patentamt**

**European Patent Office**

**Office européen des brevets**

(19)

(11) Veröffentlichungsnummer: **0 259 597 B1**

(12) **EUROPÄISCHE PATENTSCHRIFT**

(45) Veröffentlichungstag der Patentschrift: **20.05.92**

(51) Int. Cl.⁵: **B29C 67/22**, B29C 35/04

(21) Anmeldenummer: **87111095.3**

(22) Anmeldetag: **31.07.87**

(54) **Sinterverfahren für thermoplastische, schäumbare Kunststoffe.**

(30) Priorität: **02.09.86 DE 3629885**

(43) Veröffentlichungstag der Anmeldung:
**16.03.88 Patentblatt 88/11**

(45) Bekanntmachung des Hinweises auf die
Patenterteilung:
**20.05.92 Patentblatt 92/21**

(84) Benannte Vertragsstaaten:
**AT CH ES FR GB IT LI NL**

(56) Entgegenhaltungen:
**FR-A- 2 449 518**
**NL-A- 8 500 079**
**US-A- 4 333 897**

**PATENT ABSTRACTS OF JAPAN, Band 7, Nr.
110 (M-214)[1255], 13. Mai 1983; & JP-A-58 31
722 (DAISEN KOGYO K.K.) 24-02-1983**

(73) Patentinhaber: **Hahn, Ortwin, Prof. Dr.-Ing.
Hüfferweg 9
W-4790 Paderborn(DE)**

(72) Erfinder: **Hahn, Ortwin, Prof. Dr.-Ing.
Hüfferweg 9
W-4790 Paderborn(DE)**
Erfinder: **Hümmler Johannes, Dipl.-Ing.
Kalkwerkstrasse 70
W-5950 Finnentrop(DE)**
Erfinder: **Austermeier, Meinolf, Dipl.-Ing.
Am Rippinger Weg 20
W-4790 Paderborn(DE)**

(74) Vertreter: **Hanewinkel, Lorenz, Dipl.-Phys.
Patentanwalt Ferrariweg 17a
W-4790 Paderborn(DE)**

**Beschreibung**

Die Erfindung betrifft ein Verfahren und eine Vorrichtung zu dessen Durchführung zum Sintern von schäumbarem Kunststoffmaterial, z.B. schäumbarem Polystyrolgranulat, das in einen Formhohlraum eingebracht wird, der von Formwänden relativ geringer Wärmeleitfähigkeit und relativ geringer Wärmekapazität, z.B. aus Kunststoff, umgeben ist, die mit Dampfdurchlässen durchsetzt sind, die zu einer Unterdruckquelle verbunden sind, wobei das Kunststoffmaterial im Formhohlraum mit Sinterenergie, die als Kondensationsenergie von Wasserdampf eingebracht wird, gesteuert beaufschlagt wird und danach auf eine vorgegebene Entformungstemperatur durch Unterdruck abgekühlt und als Formling daraus entformt wird.

Eine derartige Vorrichtung ist aus NL-A-8 500 079 bekannt. Diese weist dünne Formwände aus Kunststoff geringer Wärmekapazität auf. Diese hat Durchlässe, durch die Wasserdampf relativ hohen Druckes und hoher Temperatur in den mit Sintermaterial gefüllten Formhohlraum eingebracht wird, so daß das enstehende Sintergut verhältnismäßig stark erwärmt wird, was einen hohen Energieaufwand bedeutet und einen entsprechend hohen Energieaufwand bei der anschließenden Abkühlung durch Vakuum und eine Kühlwassereinspritzung erfordert. Außerdem besteht die Gefahr, daß der Sinterkörper Kühlwasser aufnimmt, was i.a. eine Nachtrocknung erfordert.

Weiterhin ist es aus DE-B2- 21 02 223 bekannt, in eine Formvorrichtung Formwände einzusetzen, die einen Formhohlraum umschließen, in dem schäumbares Kunststoffmaterial durch Hochfrequenz erhitzt wird. Dabei tritt in dem Kunststoffmaterial durch das Vorschäumen eingebrachte Feuchtigkeit aus, die durch Dampfdurchlässe durch die Formwände in diese umgegebene Kammern und von dort in eine Absaugvorrichtung geführt wird. Die Formwand ist aus dünnschichtigem Kunststoff mit einer Stützkonstruktion versehen ausgeführt. Durch den austretenden Dampf wird die Formwand beheizt. Das bekannte Verfahren hat den Nachteil, daß die Hochfrequenzbeheizung nur mit relativ geringer Leistungszufuhr und deshalb mit langen Verweilzeiten in der Form ausgeführt werden kann und die Feuchtigkeit bei dem Heiz- und Sintervorgang aus dem Kunststoffmaterial austritt, was einerseits zum Wärmeentzug durch die Verdampfung beim Sinterprozeß führt, was die Energiezuführungszeit weiter verlängert, und was andererseits zu einer Trocknung des Sinterteils vor dessen Abkühlung führt, so daß der trockene und schlecht wärmeleitende Formling eine sehr lange Abkühlzeit benötigt, bis er ausreichend verfestigt ist, daß er entnommen werden kann.

Es ist weiterhin aus DE-A1 16 29 485 bekannt, für Formen zum Schäumen von Polyurethanformkörpern gasdurchlässige, poröse Kunststoffe zu verwenden, damit die Schäumgase austreten können.

Weiterhin ist es aus DE-A1 32 37 175 bekannt, schäumbare, thermoplastische Kunststoffe in einer Formvorrichtung durch Zuführung von Prozeßdampf auf einen Sinterzustand aufzuheizen und anschließend den Sinterkuchen abzukühlen und zu entformen. Die Formwände der Vorrichtung sind aus gut wärmeleitendem Metall zur Aufheizung und späteren Abkühlung der Oberfläche des Kunststoffmaterials. Diese Aufheizung und Abkühlung der Formwände wird entweder durch Zuführung von Heiz- und Kühlmitteln in besonderen Kanälen oder in Kammern, über die auch der Prozeßdampf zugeführt wird, vorgenommen. Dies bedeutet einen Energieaufwand für die wechselnde Heizung und Kühlung der Formwände, der ein Mehrfaches dessen beträgt, was für das Kunststoffmaterial selbst wirksam wird. Zur Beschleunigung der Kühlung des Formlings ist eine steuerbare Verbindung des Formhohlraumes über die umgebenden Kammern oder Kanäle mit einer Vakuumquelle vorgesehen.

Bei den vorbekannten Sinterverfahren wird mit überhitztem Dampf das Kunststoffmaterial in der Form und diese selbst aufgeheizt, so daß sich die Kondensatbildung an der Formwand, die eine relativ hohe Wärmekapezität und gute Leitfähigkeit hat, nur beschränkt stattfindet. In dem Buch: Expandierbares Polystyrol (EPS), VDI-Verlag, Düsseldorf 1984, S. 99-103 und S. 117 ist zur Kühlung der aufgeheizten Formwand und des Formlings eine Kombination einer Sprühkühlung der Formwand mit Kühlwasser und eine ergänzende Vakuumkühlung durch Kondensatverdampfung beschrieben. Eine 100-prozentige Kühlung durch Vakuumeinwirkung ist jedoch weder vorgesehen noch möglich, da die Voraussetzung dazu, nämlich eine adäquate Menge Kondensat im Kunststoff, fehlt weil der verwandte trockene überhitzte Dampf nur wenig Kondensat entstehen läßt. Sobald das Kondensat jeweils durch das Vakuum verdampft ist, bewirkt dieses keine weitere Kühlung, so daß durch die gut wärmeleitenden Formwände mittels Wärmeleitung weitergekühlt werden muß, was jedoch bei dickwandigen Formlingen zu relativ langen Kühlzeiten führt.

Es ist Aufgabe der Erfindung ein Sinterverfahren für thermoplastisches, schäumbares Kunststoffmaterial und eine Vorrichtung dafür zu offenbaren, wobei der gesamte Energiebedarf für die Sinterung eines Formteiles und dessen Kühlung auf eine Entformungstemperatur, die gute Formlingsqualität gewährleistet, nur wenig höher als für das Erreichen und das Verfestigen es Kunststoffmaterials selbst liegt und bei dem relativ kurze Sinter- und Kühlzeiten benötigt werden und aufwendige Hochfrequenzvorrichtungen oder gesonderte Formwandkanäle und eine Kühlvorrichtung im Werkzeug nicht benötigt werden.

Die Lösung der Aufgabe besteht darin, daß der Wasserdampf eine Dampftemperatur, die 5 bis 25 Grad C über der Sintertemperatur des Kunststoffmaterials liegt, und einen vorgegebenen hohen Sättigungsgrad aufweist, so daß die Dampftemperatur etwa 5 Grad C über der Dampfsättigungstemperatur liegt, durch die Dampfdurchlässe dem Kunststoffmaterial zugeführt wird und bei erfolgter Sinterung die Dampfzufuhr beendet wird und dann gesteuert das im Kunststoffmaterial kondensierte Wasser mittels des Unterdrucks abgeführt wird, bis die Entformungstemperatur erreicht ist.

Weitere vorteilhafte Ausgestaltungen sind in den Unteransprüchen angegegeben.

Durch die Verwendung von Kunststofformwänden mit geringer Wärmeleitung ist es möglich, nur deren Oberfläche auf die Sintertemperatur zu bringen und dann wieder abzukühlen, wobei das Innere der Formwände jeweils nur einen geringen Temperaturhub in einem Zyklus durchläuft. Der Dampf, der annähernd gesättigt zugeführt wird, kondensiert je nach Wärmebedarf im Kunststoffmaterial und gibt seine Kondensationswärme als Prozeßwärme dort ab. Bei dem anschließenden Kühlvorgang wird eine Druckentlastung und Dampfabführung vorgenommen, wodurch die eingelagerte Feuchtigkeit, die sich anfangs etwa auf einer Temperatur von 115 Grad C befindet, verdampft und dabei unmittelbar dem Kunststoffmaterial die Verdampfungswärme entzogen wird. Die Druckabsenkung geschieht zum einen durch Kondensation des Dampfes mittels Kühlwassereinspritzung in eine an die Kammern, die die Formwände umgeben, angeschlossene Kondensationskammer und zum anderen durch eine Vakuumquelle, die aus dem Formhohlraum, dem Formteil und den Kammern dort vorhandene Luft oder Schäummittelgase absaugt. Die Kondensationskammer und Vakuumquelle werden vorteilhaft über gesteuerte Ventile nacheinander mit den Kammern verbunden, so daß die Vakuumpumpe erst dann zugeschaltet wird, wenn durch die Kondensation bereits der Dampfdruck weitgehend abgesenkt ist.

Die Kammern, die die Formwände umgeben, haben zweckmäßig ein geringes Volumen, und sie sind innenseitig mit wärmeisolierenden Auskleidungen versehen, so daß sie praktisch stets trocken bleiben. Die Kondensationskammer, die gekühlt ist oder in die Kühlwasser eingespritzt wird, ist nur beim Kühlvorgang mit den Kammern verbunden, so daß die Kühlkammer während des Heizvorganges eines nächsten Formlings bereits wieder entsorgt und vorgekühlt werden kann.

In einer vorteilhaften Ausgestaltung ist die Vakuumpumpe eine Wasserstrahlpumpe, die mit Kühlwasser betrieben wird, so daß sie Kondensat und Gase abzieht.

Eine vorteilhafte Weiterentwicklung des Verfahrens besteht darin, daß die Bedampfung mit einem ersten Druck und einer ersten Temperatur annähernd bis zum Abschluß des Sinterns erfolgt und danach für wenige Sekunden eine Bedampfung mit einem zweiten, höheren Druck und einer zweiten, höheren Temperatur erfolgt, wobei praktisch nur die Oberfläche des Formlings und der Formwand weiter aufgeheizt wird, so daß die Formlingsoberfläche dicht und glatt verschweißt. Da nur die Oberflächen während dieser kurzen Zeitspanne erwärmt werden, ist der zusätzliche Energieverbrauch dafür und für die anschließende Abkühlung relativ gering.

Die Ausgestaltung der Formwand liegt im Rahmen des fachmännischen Könnens insbes. der Herstellung von faserverstärkten Epoxidharzgegenständen. Die Dampfkanäle können in Form bekannter Düseneinsätze eingegossen oder eingesetzt werden, oder es kann vorteilhaft poröser, dampfdurchlässiger Kunststoff eingesetzt werden. Auch können die Dampfkanäle bei der Formherstellung durch herausnehmbare Stifte eingeformt oder nachträglich eingebracht werden. Besonders vorteilhaft lassen sich Temperatur- und Drucksensoren bei der Herstellung der Formwand einbringen. Die Fertigung einer Kunststofformwand ist i. a. wesentlich einfacher und kostengünstiger als die einer Metallform.

Auch ist es vorteilhaft möglich, die Formwände selbst als Kunststofformteile durch Spritzverfahren herzustellen, so daß sie im Falle der Herstellung von Großserienteilen jeweils bei Erreichung einer Abnutzungsgrenze leicht durch formgleiche kostengünstige neue Spritzteile ersetzbar sind.

Die Prozeßsteuerung des jeweiligen Beginns und der Beendigung des Einbringens des vorgeschäumten Kunststoffgranulatsmaterials, der Bedampfungen bei dem ersten bzw. zweiten Druck und einer Querbedampfung, die Ventilsteuerung zur Verbindung mit der Kühlkammer und der Vakuumquelle und evtl. die Kühlwassereinspritzung und die Entformung erfolgt zweckmäßig über eine zentrale Steuervorrichtung. Diese kann in bekannter Weise durch eine zeitabhängige oder durch eine sensorabhängige Steuerung die geeigneten Zeitpunkte für die einzelnen Prozeßphasen vorgeben und die entsprechenden Ventile und Motore ansteuern und aktivieren. Durch die geringe zusätzliche Wärmeaufnahme bzw. Abgabe der Formwand ist die Signalgabe der Sensoren wesentlich enger auf den Zustand des Kunststoffmaterials im Formhohlraum bezogen, so daß die Steuerung exakter erfolgt und Trägheiten nicht zu berücksichtigen sind.

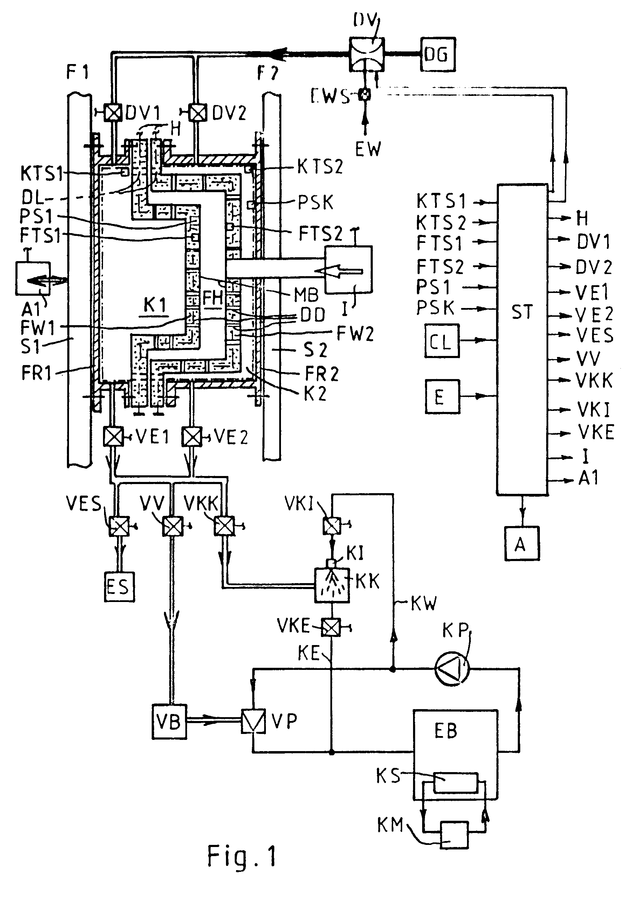

In der Fig. 1 ist eine Vorrichtung schematisch dargestellt, anhand derer das Verfahren im folgenden dargestellt wird.

Der Formhohlraum (FH) ist von den Formwänden (FW1, FW2), die aus Kunststoffmaterial bestehen, umgeben. Diese sind von den Kammern (K1, K2) umgeben, die nach außen durch die thermisch innenisolierten Seiten- und Rückwände (FR1, FR2) abgeschlossen sind. Die Formwände (FW1, FW2) sind porös oder von Dampfdurchlaßkanälen durchsetzt. Die Rückwände (FR1, FR2) sind an Schilden (S1, S2) befestigt, von denen einer feststehend und der andere in einer Führung (nicht dargestellt) parallel verschieblich ist. Dieser ist mit einem Schiebeantrieb (A1) verbunden, der von der Steuervorrichtung (ST) zum Schließen der Form bzw. zum Öffnen und Entformen des Formlings betätigbar ist.

Die Kammern (K1, K2) sind jeweils über ein steuerbares Dampfreduzierventil (DV) mit dem Dampfgenerator (DG) verbunden. Das Dampfventil (DV) besitzt eine Wassereinspritzung, so daß er stets ausgangsseitig Dampf liefert, der wenige Grad, z.B. 5 Grad C, über der Sättigungstemperatur liegt. Es kann von der Steuervorrichtung jeweils ein bestimmter Druck abgangsseitig vorgegeben werden. Statt eines derartigen steuerbaren Reduzierventils (DV) kann auch ein fest eingestelltes Ventil eingesetzt werden, wobei dann für das Nachsintern der Oberfläche, sofern dieser Prozeßschritt vorgegeben ist, dann ein zweites Ventil parallel dazu geschaltet ist, das heißeren Dampf abgibt. Die jeweiligen Steuersignale liefert die Steuervorrichtung (ST) dafür.

Weiterhin sind die Kammern (K1, K2) mit einer Kühlkammer (KK) über ein steuerbares Ventil (VK) verbunden. In diese führt ein Kühlwasserinjektor (KI), der mit einem steuerbaren Ventil (VKI) an eine Kühlwasserversorgung (KW) angeschlossen ist. Weiterhin ist an die Kammern (K1, K2) über ein steuerbaes Vakuumventil (VV) ein Vakuumbehälter (VB) angeschlossen, der ein Vielfaches der Kammervolumina der Kammern (K1, K2) und des Formhohlraumes (FH) besitzt, so daß die daran angeschlossene Vakuumpumpe (VP) kontinuierlich arbeiten kann und der in den Kammern (K1, K2) nach erster Dampfkondensation noch vorhandene Druck bei Öffnung des Vakuumventils (VV) schnell abgebaut wird.

In einer weiteren Ausführung der Vorrichtung wird statt der getrennten Kühl- und Vakuumkammern (KK, VB) eine kombinierte Entsorgungskammer verwandt. Dabei ist es vorteilhaft, als Vakuumpumpe (VP) eine Wasserstrahlpumpe einzusetzen, die eine gesonderte Kühlwassereinspritzung und Kühlwasserentsorgung dafür und die zugehörigen Ventile (VKI, VKE) erübrigt. Die entsorgte Flüssigkeit wird einem Vorratsbehälter (EB) zugeführt, in dem sie aufgenommenes Gas abgeben kann und von einem Kondensator (KS) einer Kühlmaschine (KM) abgekühlt wird, bevor sie von einer Kühlwasserpumpe (KP) erneut der Vakuumpumpe (VP) zugeführt wird.

Statt in eine gesonderte Kühlkammer (KK) kann das Kühlwasser (KW) auch in die Kammern (K1, K2) injiziert werden. Die dabei dort eingebrachte Feuchtigkeit führt jedoch bei der anschließenden Heizung zu erhöhtem Energie-bzw. Dampfverbrauch.

Die Zuführung des Kunststoffgranulats zum Formhohlraum (FH) geschieht mit einem Injektor (I), dessen Speiserohr durch die Kammer (K2) und die Formwand (FW2) in den Formhohlraum (FH) führt.

In die Formwände (FW1, FW2) und in die Kammern (K1, K2) sind Temperatur- und Drucksensoren (FTS1, FTS2; KTS1, KTS2; PS1) eingebaut, die mit der Steuervorrichtung (ST) eingangsseitig verbunden sind. In dieser werden durch Vergleich mit Vorgabewerten die für die einzelnen Prozeßschritte, nämlich das Evakuieren oder Querbedampfen, das Sintern, das Oberflächensintern, die Abkühlung und die Entformung, das Prozeßschrittende bestimmt, und demgemäß werden von abgegebenen Steuersignalen die Ventile geöffnet bzw. geschlossen. Einzelne Vorgänge werden auch ebenso wie Grenzzeiten bei Störungen der Sensormeldungen durch Überwachung von Vorgabezeiten durch die Steuervorrichtung, die eingangsseitig mit einem Zeitgeber (CL) verbunden ist, gesteuert. Eine Tastatur (E) dient der Eingabe der Vorgabewerte und ein Ausgabegerät (A) der Signalisierung von Störungen an dem Bediener. Auch andere bekannte Steuerverfahren, die die zeitlichen Veränderungen der Steuersignale auswerten, können verwandt werden.

Ein vorteilhaftes Verfahren arbeitet dabei wie folgt:

a.) Schließen der Form;

b.) Injizieren von vorgeschäumtem Kunststoff-Granulat;

c1) Querbedampfen von Kammer zu Kammer zum Aufheizen des Kunststoff-Granulats bis eine vorgegebene Aufheiztemperatur an einem Kammer-Temperatursensor (KTS1, KTS2) erreicht ist oder

c2) Evakuieren bis ein vorgegebener Unterdruck erreicht ist oder eine bestimmte weitere Zeit vergangen ist;

d.) Bedampfen bei einem vorgegebenen, ersten Dampfdruck bei vorgegebenen Sättigungsgrad, bis ein vorgegebener erster Sinterdurckwert an dem Drucksensore (PS1) oder eine erste vorgegebene Sintertemperatur von den Temperatursensoren (FTS1, FTS2) gemeldet wird oder eine Grenzzeit erreicht ist.

e.) Bedampfen bei einem zweiten vorgegeben höheren Dampfdruck und bei vorgegebenen Sättigungsgraden bis ein zweiter höherer vorgegebener Sinterdruck von dem Drucksensore (PS1) oder eine vorgegebene Sintertemperatur von dem Temperatursensor (FTS1, FTS2) gemeldet wird oder eine weitere bestimmte Zeit vergangen ist, dann Schließen des Dampfventils.

f.) Öffnen des Ventils (VKK) zur Kühlkammer (KK), danach Bestimmung der Anfangsabkühlgeschwindigkeit und fortlaufende Überwachung bis ein bestimmter dritter Druckwert von dem Drucksensor(PS1) und eine vorgegebene dritte Temperatur am Temperatursensor (FTS1, FTS2) erreicht ist oder eine weitere bestimmte Zeit vergangen ist, dann Schließen des Kühlkammerventils (VKK).

g.) Öffnen des Ventils (VV) zum Vakuumbehälter (VB) bis ein bestimmter vierter Druckwert und eine vorgegebene Temperatur am Temperatursensor (FTS1, FTS2) erreicht sind gemeldet wird, oder eine weitere bestimmte Zeit vergangen ist, danach Bestimmung der Endabkühlgeschwindigkeit, dann Schließen des Vakuumventils (VV), danach

h.) Öffnen der Form und Entformen des Formlings.

i.) Bestimmung des im nächsten Zyklus vorzugebenden Sättigungsgrades aus dem Verhältnis von Anfangs- und Endabkühlgeschwindigkeit und Vorgabe and das Dampfreduzierventil (DV).

Wird als Granulat schäumbares Polystyrol verwandt, so können als Richtwerte für die Temperaturvergleichswerte gelten:

Aufheiztemperatur 95 Grad C;
erste vorgegebene Sintertemperatur 115 Grad C;
erste Dampftemperatur 120 Grad C;
Zweite vorgegebene Sintertemperatur 120 Grad C;
zweite Dampftemperatur 125 Grad C;
dritte vorgegebene Temperatur 100Grad C;
vierte vorgegebene Temperatur (Entformungstemperatur) 90 Grad C.

Die vorgegebenen Druckwerte sind abhängig von den Verhältnissen im einzelnen zu bestimmen.

Die zur genauen Messung notwendigen Druck- bzw. Temperatursensoren lassen sich vorteilhaft bei der Herstellung der Formwand aus Kunststoff in diese und zwar an deren zum Formling gerichteten Oberfläche anordnen. Da die Forwand praktisch stets die gleiche Temperatur wie die im Formhohlraum eingebrachte Kunststoffmasse hat, ist die Temperaturanzeige wesentlich genauer und verzögerungsfreier als in den bekannten metallischen Formwänden.

Die geringe Wärmeleitung und Wärmeaufnahme bzw. -abgabe der Formwand und der Kammerwände führt zu kurzen Sinter- und Abkühlzeiten. Voraussetzung für die schnelle Abkühlung ist, daß beim Sintern ausreichend Feuchtigkeit in das Sintergut durch Kondensation eingelagert wird, damit die entsprechende Feuchtigkeitsmenge zwecks Kühlung wieder abgezogen werden kann. Ein Bedampfen mit zu trockenem Dampf führt anschließend zu langen Abkühlzeiten. Aus diesem Grund wird vorteilhaft eine Steuerung des Sättigungsgrades des Dampfes bzw. der diesen bestimmenden Druck-/Temperatur-Verhältnisse davon abhängig vorgenommen, ob die Abkühlung, d.h. der zeitliche Temperaturabbau, annähernd linear erfolgt und ihre Geschwindigkeit nicht unter ein bestimmtes relatives Maß, z.B. die Hälfte, der Anfangsgeschwindigkeit absinkt, bevor die Entformungstemperatur erreicht ist. Andererseits ist es wünschenswert, weitgehend trockene Formlinge zu erhalten, weswegen die in den Formling eingebrachte Feuchtigkeit nicht unnötig hoch sein sollte, da sonst Energie für die Trocknung zusätzlich aufzuwenden ist. Die Zufuhr der Feuchtigkeit beim Bedampfen ist auch noch davon abhängig, wie viel bereits durch das Vorschäumen eingebrachte Feuchtigkeit im Granulat vorhanden ist. Somit wird durch eine Rückkopplung eines Vorgabewertes für den folgenden Sinterzyklus zur Steuerung des Sättigungsgrades an der Einspritzwassersteuerung (EWS), abhängig von der relativen Abnahme der Kühlgeschwindigkeit bis zum Erreichen der vorgegebenen Entformungstemperatur in einem gegebenen Zyklus oder abhängig von der benötigten Abkühlzeit selbst, stets wenig mehr als das minimal erforderliche Kondensat, das für eine schnelle Kühlung erforderlich ist, eingebracht und auch ein hoher Trocknungsgrad des Formlings erreicht.

Zu einer vorteilhaften Ausgestaltung wird zur Stabilisierung der Formwandtemperatur und zur Verringerung der Kondensation an den Formwänden eine elektrische Widerstandsheizung (H) in die Formwände (FW1, FW2) bei deren Herstellung eingelagert. Diese Heizung wird durch die Steuerungsvorrichtung (ST) so gesteuert, das die Formwände bei dem Kühlprozeßschritt nicht unter die Entformungstemperatur abkühlen. Alternativ kann die elektrische Heizung auch in den Kammern (K1, K2) angeordnet werden.

Eine weiter vorteilhafte Ausgestaltung der Formwände (FW1, FW2) besteht darin, daß deren zum Formhohlraum (FH) liegenden Oberflächen mit einer Metallbeschichtung (MB) versehen werden, die eine Erhöhung der Verschleißfestigkeit erbringt und eine sofortige Kondensation bei der Bedampfung an der Oberfläche bewirkt, die eine schnelle Aufheizung der Formlingsoberfläche und somit deren dichte glatte Versinterung erzeugt.

Das für die Steuerung geeignete raltive Verhältnis der Anfangs- und Endabkühlungsgeschwindigkeit ist im Einzelfall an einer Anordnung zu ermitteln. Die Verhältnisbildung ergibt eine weitgehende Unabhängigkeit von den Gegebenheiten einer bestimmten Vorrichtung.

Da die Entformungstemperatur im allgemeinen bei etwa 90 Grad C liegt, ist es erforderlich, mit darunterliegenden Kühlwassertemperaturen oder mit einem entsprechenden Unterdruck von höchstens 0,2 bar den Dampf abzusaugen, damit eine ausreichende Diffusionsgeschwindigkeit durch die Formwand und aus dem Formling erreicht wird. Sofern sicher ist, daß Luft und Fremdgase hoher Kondensationstemperatur im Formhohlraum und den Kammern vor Beginn der Kühlung nur mit einem Anteil von weniger als 10% vorhanden sind, so kann eine Vakuumpumpe neben der Kühlwasserinjektions-Vorrichtung erübrigt werden, da dann die Dampfdiffusion zur Kühlkammer kaum behindert ist. Die Zuverlässigkeit des Betriebes auch bei unterschiedlichem Granulatmaterial und evtl. vorhandenen geringen Formundichtigkeiten wird durch einen Vakuumpumpenanschluß erhöht. Andererseits kann bei Verwendung einer leistungsfähigen Vakuumpumpe auf einen Kühlwasserinjektor verzichtet werden. Dieser arbeitet jedoch sehr wirtschaftlich.

Die Steuerung des Sättigungsgrades kann entsprechend auch über die Druckabfallgeschwindigkeiten und deren Verhältnis erfolgen. Sobald der Formling annähernd trocken ist, fällt der Druck relativ schneller ab, und die Temperatur beginnt langsamer zu fallen. Hierfür eignet sich die Messung des Drucks in einer der Kammern, wozu ein Kammerdrucksensor (PSK) vorgesehen ist.

Ersatzweise kann auch eine Steuerung des Sättigungsgrades durch eine Überwachung der Zeit zur Erreichung der Entformungstemperatur bzw. des -druckes erfolgen, wobei eine längere Zeit eine zu geringe Feuchtigkeit anzeigt, so daß der Sättigungsgrad zu erhöhen ist.

Die Dampfzufuhr zum Sintern kann auch in der sogenannten Dampfstoßtechnik in die Kammern (K1, K2) wechselweise über zwischengeschaltete Dampfventile (DV1, DV2) und jeweils an der entgegengesetzten Kammer (K1, K2) geöffnete bzw. geschlossene Entsorgungsventile (VE1, VE2) erfolgen. Die Entsorgung erfolgt zweckmäßig nicht in die Kühl- oder Vakkumkammer (KK, VB), da diese hierdurch unnötig aufgeheizt würden, sondern zu einer getrennten Entsorgungsvorrichtung (ES).

Ein besonders einfacher Vorrichtungsaufbau, bei dem die Dampfventile (DV1, DV2) und die Entsorgungsventile (VE1, VE2, VES) entfallen, ergibt sich, wenn statt der Querbedampfung eine Evakuierung der Kammern (K1, K2) und des Formhohlraumes (FH) bis zu einem vorgegebenen Unterdruck vor der Bedampfung erfolgt, so daß die anschließende Dampfeinwirkung auf das Kunststoffmaterial und die Kondensation dort unghindert von Luft und Gas erfolgen kann. Die Kammern (K1, K2) werden vorteilhaft unmittelbar im Werkzeug miteinander durch dazu vorgesehene Durchlässe (DL) - gestrichelt gezeichnet - verbunden, wodurch äußere Verbindungen der Kammern entfallen.

Die hier aufgezeigten neuartigen Verfahrens- und Vorrichtungsausgstaltungen können auch vorteilhaft bei Werkzeugen mit metallischen Formwänden eingesetzt werden, insbes. wenn diese dünnwandig sind und aus Material, z.B Legierungen, relativ geringer Wärmeleitfähigkeit bestehen.

**Patentansprüche**

1. Verfahren zum Sintern von schäumbarem Kunststoffmaterial, z.B. schäumbarem Polystyrolgranulat, das in einen Formhohlraum (FH) eingebracht wird, der von Formwänden (FW1, FW2) relativ geringer Wärmeleitfähigkeit und relativ geringer Wärmekapazität, z.B. aus Kunststoff, umgeben ist, die mit Dampfdurchlässen (DD) durchsetzt sind, die zu einer Unterdruckquelle (VB, VP) verbunden sind, wobei das Kunststoffmaterial im Formhohlraum (FH) mit Sinterenergie, die als Kondensationsenergie von Wasserdampf eingebracht wird, gesteuert beaufschlagt wird und danach auf eine vorgegebene Entformungstemperatur durch Unterdruck abgekühlt und als Formling daraus entformt wird, dadurch gekennzeichnet, daß der Wasserdampf eine Dampftemperatur, die 5 bis 25 Grad C über der Sintertemperatur des Kunststoffmaterials liegt, und einen vorgegebenen hohen Sättigungsgrad aufweist, so daß die Dampftemperatur etwa 5 Grad C über der DampfsättigungsTemperatur liegt, durch die Dampfdurchlässe (DD) dem Kunststoffmaterial zugeführt wird und bei erfolgter Sinterung die Dampfzufuhr beendet wird und dann gesteuert das im Kunststoffmaterial kondensierte Wasser mittels des Unterdrucks abgeführt wird, bis die Entformungstemperatur erreicht ist.

2. Verfahren nach Anspruch 1, dadurch gekennzeichnet, daß zum Sintern dem Kunststoffmaterial Dampf mit einer ersten Dampftemperatur bis zum Erreichen eines ersten Sinterzustandes und danach Dampf mit einer zweiten, höheren Dampftemperatur bis zum Erreichen eines zweiten Sinterzustandes zur Oberflächenversinterung entsprechend kurzzeitig und zwar jeweils mit dem genannten hohen Sättigungsgrad zugeführt wird und dann die Dampfzufuhr beendet wird.

3. Verfahren nach Anspruch 1 oder Anspruch 2, dadurch gekennzeichnet, daß der Unterdruck durch eine Injektion von Kühlwasser (KW) in eine mit den Dampfdurchlässen (DD) gesteuert verbundenen Kühlkammer (KK) erzeugt wird oder der Unterdruck durch eine Vakuumpumpe (VP) erzeugt wird, die gesteuert mit den Dampfdurchlässen (DD) verbunden wird, wobei diese Verbindung zur Vakuumpumpe erst dann erfolgt, wenn der Druck nach der Injektion von Kühlwasser (KW) auf einen vorgegebenen Wert gesunken ist.

4. Verfahren nach Anspruch 3, dadurch gekennzeichnet, daß bei der Abkühlung des Kunststoffmaterials durch Unterdruck eine relative Temperatur- oder Druckabfallgeschwindigkeit zwischen der jeweiligen Geschwindigkeit zu Beginn und zum Ende der Kühlung bestimmt wird und aus einer Abweichung dieser so bestimmten Relativgröße von einem vorgegebenen Vergleichswert der Sättigungsgrad des Dampfes jeweils für eine Bedampfung im folgenden Zyklus bestimmt und dann vorgegeben wird, so daß in dem Kunststoffmaterial der Wassergehalt am Ende der Sinterung nur wenig höher ist, als zum Erreichen der vorgegebenen Entformungstemperatur durch Entzug der Verdampfungsenergie notwendig ist, oder daß die Zeit, die jeweils nach einem Sintervorgang für die Kühlung bis auf die Entformungstemperatur erforderlich ist, mit einer vorgegebenen Vorgabezeit verglichen wird und bei deren Überschreitung, der Sättigungsgrad für den folgenden Zyklus erhöht vorgegeben wird und bei deren Unterschreitung dieser erniedrigt vorgegeben wird, oder daß der Unterdruck, der jeweils bei Erreichen der Entformungstemperatur herrscht, mit einem vorgegebenen Unterdruckvergleichswert verglichen wird und abhängig von einer Abweichung von dem Vergleichswert der Sättigungsgrad für den folgenden Zyklus erhöht bzw. erniedrigt vorgegeben wird.

5. Verfahren nach einem der vorstehenden Ansprüche, dadurch gekennzeichnet, daß das Erreichen des vorgegebenen Sinterzustandes oder Entformungszustandes durch einen Vergleich von an der Formwandoberfläche zum Formhohlraum (FH) oder außerhalb dessen hinter den Dampfdurchlässen (DD) gemessenen Druck- und Temperaturmeßwerten mit vorgegebenen Druck- bzw. Temperaturwerten bestimmt wird.

6. Verfahren nach Anspruch 1, dadurch gekennzeichnet, daß vor der Dampfzuführung eine Evakuierung des Formhohlraumes (FH) auf einen vorgegebenen Unterdruck oder für eine vorgegebene Evakuierzeit erfolgt und daß zu Beginn des Dampfzuführzeitraumes wechselseitig jeweils von einer der Formwände (FW1, FW2) zur anderen eine Querbedampfung erfolgt, indem jeweils der einen der Formwände (FW1, FW2) der Dampf und der anderen Normal- oder Unterdurck von einer Entsorgungsvorrichtung (ES) zugeführt wird.

7. Vorrichtung zur Durchführung des Verfahrens nach einem der Ansprüche 1 bis 6 bei der in einer Formvorrichtung die Formwände (FW1, FW2) relativ geringer Wärmeleitfähigkeit und relativ geringer Wärmekapazität, z.B. aus Kunststoff, mit Dampfdurchlässen (DD) und von Kammern (K1, K2), die thermisch isoliert sind, umgeben angeordnet sind und die Kammern (K1, K2) über ein steuerbares Dampfventil (DV) mit einem Dampfgenerator (DG) und mindestens einem steuerbaren Ventil (VKK, VV) mit einer Unterdruckquelle (KK; VB, VP) verbindbar sind, dadurch gekennzeichnet, daß das Dampfventil (DV) ein Reduzierventil mit gesteuerter Wassereinspritzung ist, so daß es annähernd gesättigten Dampf abgibt.

8. Vorrichtung nach Anspruch 7, dadurch gekennzeichnet, daß an die Kammern (K1, K2) voneinander getrennt steuerbare Dampfzuführungs- und Entsorgungsventile (DV1, DV2, VE1, VE2) für eine Querbedampfung der Kammern (K1, K2) angeschlossen sind und hinter den Entsorgungsventilen (VE1, VE2) eine Entsorgungsvorrichtung (ES) angeschlossen ist.

9. Vorrichtung nach Anspruch 7, dadurch gekennzeichnet, daß die Kammern (K1, K2) durch einen Durchlaß (DL) bei geschlossenem Werkzeug miteinander verbunden sind.

10. Vorrichtung nach Anspruch 7, dadurch gekennzeichnet, daß die Unterdruckquelle eine Kühlkammer (KK) ist, in die, gesteuert über ein Injektorventil (VKI), ein Kühlwasser-Injektor (KI) führt und aus der eine Kühlwasserentsorgungsanschluß führt und daß zwischen dem Kühlwasserentsorgungsanschluß und dem Injektor (KI) das Kühlwasser über einen Wärmetauscher (KS) einer Kühlanlage (KM) geführt ist.

11. Vorrichtung nach einem der Ansprüche 7 bis 10, dadurch gekennzeichnet, daß die Unterdruckquelle eine Vakuumpumpe (VP) ist, der ein Vakuumbehälter (VB) vorgeschaltet ist, der ein Mehrfaches der Volumina der Kammern (K1, K2) und des Formhohlraumes (FH) faßt.

12. Vorrichtung nach Anspruch 10 oder 11, dadurch gekennzeichnet, daß die Vakuumpumpe (VP) eine Wasserstrahlpumpe ist und diese in dem Kühlwasserkreislauf hinter der Kühlwasserpumpe (KP) eingeschaltet ist und auch den Kühlwasserinjektor bildet.

13. Vorrichtung nach Anspruch 7, dadurch gekennzeichnet, daß die Dampfdurchlässe (DD) durch die Poren eines porösen Kunststoffes, aus dem die Formwände (FW1, FW2) hergestellt sind, gebildet werden.

14. Vorrichtung nach Anspruch 7, dadurch gekennzeichnet, daß die Formwände (FW1, FW2) an der zum Formhohlraum gerichteten Oberfläche eine Metallbeschichtung (MB) tragen.

15. Vorrichtung nach Anspruch 7, dadurch gekennzeichnet, daß in die Formwände (FW1, FW2) oder in die Kammern (K1, K2) eine elektrische Widerstandsheizung (H) eingebaut ist, die zwecks Verringerung der Kondensation an den Formwänden (FW1, FW2) bzw. in den Kammern (K1, K2) entsprechend gesteuert einschaltbar ist.

16. Vorrichtung nach Anspruch 7, dadurch gekennzeichnet, daß die Formwände (FW1, FW2) aus Kunststoff bestehen und in deren zum Formhohlraum (FH) liegenden Oberfläche Druck- und/oder Temperatursensoren (FRS1, FTS2; PS1) eingearbeitet sind, deren Signale einer Steuervorrichtung (ST) zugeführt werden.

17. Vorrichtung nach Anspruch 7, dadurch gekennzeichnet, daß die Formwände (FW1, FW2) Kunststoffspritzteile sind.

**Claims**

1. Process for sintering expandable plastic material, e.g. expandable polystyrene granules, which is introduced into a mould cavity (FH) enclosed by mould walls (FW1, FW2) with relatively low thermal conductivity and relatively low thermal capacity, e.g. made of plastic, through which run passages (DD) for steam which are connected to a partial vacuum source (VB, VP), sintering energy introduced as condensation energy from steam being applied in controlled fashion to the plastic material in the mould cavity (FH) and thereafter said plastic material being cooled to a preset demoulding temperature using a partial vacuum and removed as a moulding therefrom, characterised in that the steam is at a temperature 5 to 25 degrees C above the sintering temperature of the plastic material and exhibits a preset high degree of saturation, as a result of which the temperature of the steam is around 5 degrees C above steam saturation temperature, is fed to the plastic material through the steam passages (DD) and once sintering has taken place the supply of steam is shut off and the water that has condensed in the plastic material is then drawn off in controlled fashion using the partial vacuum, until the demoulding temperature is reached.

2. Process according to claim 1, characterised in that to sinter it steam is supplied to the plastic material at a first steam temperature until a first sintering stage is attained and thereafter steam is supplied at a second, higher steam temperature for a correspondingly short time for surface sintering until a second sintering stage is attained, in each case at the aforesaid high degree of saturation, after which the supply of steam is shut off.

3. Process according to claim 1 or claim 2, characterised in that the partial vacuum is generated by injecting cooling water (KW) into a cooling chamber (KK) connected in controlled fashion to the steam passages (DD), or else the partial vacuum is generated by a vacuum pump (VP) connected in controlled fashion to the steam passages (DD), said connection to the vacuum pump only being effected once the pressure has fallen to a preset level following the injection of cooling water (KW).

4. Process according to claim 3, characterised in that when the plastic material is cooled by partial vacuum, a relative rate of temperature or pressure loss is determined between the respective rate at the start and at the end of cooling, and from a deviation of this so determined relative variable from a preset comparison level the degree of saturation of the steam is determined for steam treatment in each following cycle and then preset, with the result that by the end of the sintering process the amount of water contained in the plastic material is only slightly higher than is necessary to reach the preset demoulding temperature by removing the energy of evaporation, or that the time taken after each sintering operation for cooling to the demoulding temperature is compared with a preset allowed time, and if it exceeds the latter the degree of saturation is set higher for the cycle to follow, while if it is less than the latter said degree of saturation is set lower, or that the partial vacuum obtaining each time the demoulding temperature is reached is compared with a preset vacuum comparison level and the degree of saturation is set higher or lower for the cycle to follow, based on a deviation from the comparison level.

5. Process according to one of the preceding claims, characterised in that it is determined when the preset sintering stage or demoulding stage has been reached by comparing pressure and temperature readings taken on the mould wall surface of the mould cavity (FH) or outside same behind the steam passages (DD) respectively with preset pressure and temperature levels.

6. Process according to claim 1, characterised in that prior to admission of the steam, the mould cavity (FH) is evacuated to a preset partial vacuum or for a preset evacuation time and that at the start of the steam admission period steam treatment is applied alternately from a respective one of the mould walls (FW1, FW2) across to the other, in each case the steam being supplied to one of the mould walls (FW1, FW2) and normal pressure or a partial vacuum being supplied to the other from a discharge device (ES).

7. Device for carrying out the method according to one of claims 1 to 6, wherein in a moulding unit the mould walls (FW1, FW2) with relatively low thermal conductivity and relatively low thermal capacity, e.g. made of plastic, are arranged having passages (DD) for steam and enclosed by heat-insulated chambers (K1, K2), and the chambers (K1, K2) can be connected via a controllable steam valve (DV) to a steam generator (DG) and at least one controllable valve (VKK, VV) to a vacuum source (KK; VB, VP),
characterised in that the steam valve (DV) is a reducing valve with controlled injection of water, with the result that it emits more or less saturated steam.

8. Device according to claim 7, characterised in that connected to the chambers (K1, K2) are independently controllable steam admission and discharge valves (DV1, DV2; VE1, VE2) for applying steam across the chambers (K1, K2), and behind the discharge valves (VE1, VE2) a discharge device (ES) is connected.

9. Device acording to claim 7, characterised in that the chambers (K1, K2) are interconnected by a passage (DL) when the tool is closed.

10. Device according to claim 7, characterised in that the partial vacuum source is a cooling chamber (KK), into which leads a cooling water injector (KI) controlled via an injector valve (VK1), and from which leads a cooling water discharge connection leads, and that the cooling water is passed between the cooling water discharge connection and the injector (KI) via a heat exchanger (KS) of a cooling unit (KM).

11. Device according to one of claims 7 to 10, characterised in that the partial vacuum source is a vacuum pump (VP), upstream of which is connected a vacuum vessel (VB) with a capacity several times the volumes of the chambers (K1, K2) and the mould cavity (FH).

12. Device according to claim 10 or 11, characterised in that the vacuum pump (VP) is a water jet pump and the latter is plumbed into the cooling water circuit behind the cooling water pump (KP) and also constitutes the cooling water injector.

13. Device according to claim 7, characterised in that the steam passages (DD) are constituted by the pores of a porous plastic from which the mould walls (FW1, FW2) are manufactured.

14. Device according to claim 7, characterised in that the mould walls (FW1, FW2) have a coating of metal on the surface nearest the mould cavity.

15. Device according to claim 7, characterised in that built into the mould walls (FW1, FW2) or into the chambers (K1, K2) is an electrical resistance heater (H), which can be switched on as necessary to reduce the condensation on the mould walls (FW1, FW) or in the chambers (K1, K2).

16. Device according to claim 7, characterised in that the mould walls (FW1, FW2) are made of plastic and pressure and/or temperature sensors (FRS1, FRS2; PS1) are let in the surface thereof facing the mould cavity (FH), the signals from which sensors are passed to a control unit (ST).

17. Device according to claim 7, characterised in that the mould walls (FW1, FW2) are plastic injection mouldings.

## Revendications

1. Procédé de frittage pour matière plastique apte au moussage, par exemple granulé de polystyrène, mis dans un moule creux (FH), entouré de parois de moule (FW1, FW2) de conductibilité thermique peu élevée et de capacité calorique relativement faible, par exemple en matière plastique, et parsemé d'orifices de passage de vapeur (DD), reliés à une source de dépression (VB, VP), la matière plastique contenue dans le moule (FH) étant soumise à une énergie de frittage, amenée sous forme d'énergie de condensation de vapeur d'eau, puis refroidie par dépression à une température de démoulage prédéterminée et sortie du moule sous forme d'aggloméré, caractérisé par le fait que la vapeur d'eau présente une température de vapeur supérieure de 5 à 25 degrés C à celle de la température de frittage de la matière plastique et un degré de saturation d'une hauteur prédéterminée, de sorte que la température de la vapeur dépasse d'environ 5 degrés C la température de saturation de vapeur et est conduite à la matière plastique à travailler par les orifices de passage de vapeur (DD) et que, le frittage achevé, l'alimentation en vapeur se trouve terminée et l'eau condensée, contenue dans la matière plastique frittée, se trouve évacuée par dépression, jusqu'à obtention de la température de démoulage.

2. Procédé de frittage selon revendication 1, caractérisé par le fait que, pour le frittage de la matière plastique, de la vapeur est amenée à la matière plastique à travailler, à savoir: de la vapeur à une première température jusqu'à l'obtention d'un premier état de frittage, puis de la vapeur à une seconde température, plus élevée, jusqu'à l'obtention d'un second état de frittage pour frittage de la surface, ceci pendant un laps de temps adéquatement bref et avec le degré de saturation élevé, respectivement indiqué, l'alimentation en vapeur étant arrêtée ensuite.

3. Procédé de frittage selon revendication 1 ou 2, caractérisé par le fait que la dépression est obtenue par une injection d'eau réfrigérante (KW), dans une chambre de refroidissement (KK) reliée, étant commandée, aux orifices de passage de vapeur (DD) ou à l'aide d'une pompe à vide (VP), qui, commandée, est reliée aux orifices de passage de vapeur (DD), ce raccordement à la pompe à vide n'ayant lieu que quand la pression est descendue à une valeur prescrite, après l'injection de l'eau réfrigérante (KW).

4. Procédé selon revendication 3, caractérisé par le fait que, lors du refroidissement par dépression de la matière plastique à fritter, une vitesse relative de chute de température et de pression, entre la vitesse respective du début et de la fin du refroidissement est définie et que, sur la base d'une divergence entre ces deux grandeurs relatives ainsi définies et une valeur comparative prescrite, le degré de saturation de la vapeur est déterminé et prescrit respectivement pour une vaporisation au cours du cycle suivant, de sorte qu'à la fin du frittage la teneur en eau de la matière plastique soit à peine plus élevée qu'il n'est nécessaire pour obtenir la température de démoulage prescrite par extraction de l'énergie de vaporisation, ou que le temps de refroidissement, nécessaire, après une opération de frittage, pour atteindre la température de démoulage, est comparé avec une temps prescrit, un degré de saturation plus élevé étant alors prévu pour le cycle suivant en cas de surpassement ou réduit en cas de souspassement, ou que la dépression, régnant respectivement au moment où la température de démoulage est atteinte, est comparée avec une valeur comparative de dépression prescrite et qu'en fonction de la divergence de cette valeur comparative, un degré de saturation adéquatement plus élevé ou plus faible est prédéterminé pour le cycle suivant.

5. Procédé de frittage selon l'une des revendication précédente, caractérsié par le fait que l'obtention respective de l'état de frittage et de l'état de démoulage prescrits est déterminée par une comparaison entre les valeurs de pression et de température, mesurées à la surface de la paroi du moule vers le creux du moule (FH) ou à l'extérieur de celui-ci, derrière les orifices de passage de vapeur (DD), et les valeurs de pression et de température prescrites.

6. Procédé selon revendication 1, caractérisé par le fait qu'une évacuation du creux de moule (FH a lieu, avant l'amenée de vapeur, en fonction d'une dépression prédéterminée ou pour un temps d'évacuation prédéterminé, et qu'au début du temps d'alimentation en vapeur, une vaporisation transversale a lieu, alternativement, de l'une des parois de moule (FW1, FW2) à l'autre, la vapeur étant conduite, respectivement, à l'une des paroi de moule (FW1, (FW2), tandis que l'autre est soumise à une pression normale ou à une dépression, par l'intermédiaire d'un dispositif d'évacuation (ES).

**7.** Dispositif d'exécution du procédé selon l'une des revendications 1 à 6, dans laquelle les parois de moule (FW1, FW2) de conductibilité thermique peu élevée et de capacité calorique relativement faible, par exemple en matière plastique, et pourvues d'orifices de passage de vapeur (DD) et entourées de chambres (K1, K2), isolées thermiquement, sont disposées dans un dispositif de moulage, les chambres (K1, K2) pouvant être reliées à un générateur de vapeur (DG), à l'aide d'une soupape à vapeur réglable (DV) et à une source de dépression (KK; VB, VP), par l'intermédiaire d'au moins une soupape réglable (VKK, VU), caractérisé par le fait que la soupape à vapeur (DV) est un détendeur avec injection d'eau commandée, de sorte qu'elle assure un apport de vapeur approximativement saturé.

**8.** Dispositif selon revendication 7, caractérisé par le fait que des soupapes d'alimentation en vapeur et d'évacuation (DV1, DV2; VE1, VE2), commandées séparément, sont raccordées aux chambres (K1, K2) pour la vaporisation transversale des chambres (K1, K2) et qu'un dispositif d'évacuation (ES) est raccordée derrière les soupapes d'évacuation (VE1, VE2).

**9.** Dispositif selon revendication 7, caractérisé par le fait que les chambres (K1, K2) sont reliées entre elles par un passage (DL) lorsque le moule est fermé.

**10.** Dispositif selon revendication 7, caractérisé par le fait que la source de dépression est une chambre de refroidissement (KK), dans laquelle, un injecteur d'eau réfrigérante (K1), commandé à l'aide d'une soupape d'injection (VKI), est introduit, et de laquelle part un raccord d'évacuation d'eau réfrigérante, et qu, entre le raccord d'évacuation d'eau réfrigérante et l'injecteur (KI), l'eau réfrigérante est conduite à une installation de réfrigération (KM), par l'intermédiaire d'un échangeur thermique (KS).

**11.** Dispositif selon l'une des revendications 7 à 10, caractérisé par le fait que la source de dépression est une pompe à vide (VP), en amont de laquelle un bassin à vide (VB) est connecté, dont le volume est de plusieurs fois supérieur aux volumes des chambres (K1, K2) et du creux de moule (FH).

**12.** Dispositif selon revendication 10 ou 11, caractérisé par le fait que la pompe à vide (VP) est un éjecteur à eau, connecté, dans le circuit d'eau réfrigérante, derrière la pompe d'eau de réfrigération (KP) et formant aussi un injecteur d'eau de refroidissement.

**13.** Dispositif selon revendication 7, caractérisé par le fait que les orifices de passage de vapeur (DD) sont formés par les pores d'une matière plastique poreuse qui forme les parois du moule (FW1, FW2).

**14.** Dispositif selon revendication 7, caractérisé par le fait que la surface des parois de moule (FW1, FW2) dirigée vers le creux du moule est pourvue d'un revêtement métallique (MB)

**15.** Dispositif selon revendication 7, caractérisé par le fait que, dans les parois du moule (FW1, FW2) ou dans les chambres (K1, K2), un chauffage ohmique électrique (H) est incorporé, lequel, commandé adéquatement, peut être connecté en vue de réduire la condensation sur les parois de moule (FW1, FW2) ou dans les chambres (K1, K2).

**16.** Dispositif selon revendication 7, caractérisé par le fait que les parois de moule (FW1, FW2) sont exécutées en matière plastique et que, dans leur surface dirigée vers le creux du moule (FH), des capteurs de pression et/ou de température (FRS1, FTS2; PS1) sont incorporés, dont les signaux sont conduits à un dispositif de commande (ST).

**17.** Dispositif selon revendication 7, caractérisé par le fait que les parois de moule (FW1, FW2) sont des pièces en matière plastique moulées par injection.

Fig.1